# EUROPÄISCHE PATENTSCHRIFT

(11) **EP 3 169 515 B1**
(45) Veröffentlichungstag und Bekanntmachung des Hinweises auf die Patenterteilung: **23.12.2020**
(21) Anmeldenummer: 15722528.5
(22) Anmeldetag: 13.05.2015
(51) Int. Cl.: B32B 5/18, B32B 27/32, B32B 27/08, B32B 27/36

(54) **FOLIE FÜR AIRBAGANWENDUNGEN**
FILM FOR AIRBAG APPLICATIONS
FEUILLE POUR APPLICATION AUX SACS GONFLABLES

(30) Priorität: 17.07.2014 DE 102014213974
(43) Veröffentlichungstag der Anmeldung: 24.05.2017
(73) Patentinhaber: Benecke-Kaliko AG, 30419 Hannover (DE)
(72) Erfinder: HÜLSEWEDE, Volker, 73114 Schlat (DE); MANI, Joseph, 73054 Eislingen (DE); MALNER, Thomas, 73033 Göppingen (DE); BÜHRING, Jürgen, 30900 Wedemark (DE)
(74) Vertreter: Kilsch, Armin Ralph
(86) Internationale Anmeldenummer: PCT/EP2015/060573
(87) Internationale Veröffentlichungsnummer: WO 2016/008613

(56) Entgegenhaltungen:
- EP-A1- 2 161 125
- WO-A1-2012/100880
- DE-A1- 10 164 761

## Beschreibung

Die Erfindung betrifft ein Schaumfolienlaminat zur Beschichtung von Bauteilen, wie der Innenverkleidung von Kraftfahrzeugen, insbesondere von Airbag-Abdeckungen, dessen Verwendung sowie Innenverkleidungsteile von Kraftfahrzeugen, die mit dem Schaumfolienlaminat beschichtet sind.

Im Bereich der Polyolefin basierten dekorative Flächenmaterialien werden im Moment im wesentlichen zwei Konstruktionen verwendet. Für Anwendungen und Bauteile, in denen das Flächenmaterial in nachgeschalteten thermischen Umformprozessen einer starken Verstreckung (z.B. > 200%) unterworfen ist, werden bevorzugt kompakte Folienkonstruktionen, die aus mehreren Schichten aufgebaut sein können, verwendet. Diese Materialien weisen in der Regel eine Dichte von > 800 kg/m³ bei einer Dicke von 0,5- 3,0 mm auf, wodurch die Bauteile ein entsprechend hohes Gewicht und damit einhergehend einen hohen Rohmaterialbedarf haben.

Für Anwendungen und Bauteile, in denen das Flächenmaterial in nachgeschalteten thermischen Umformprozessen einer geringen Verstreckung (z.B. < 200%) unterworfen wird, können Flächenmaterialien mit mindestens einer geschäumten Schicht, sogenannte Schaumfolien, eingesetzt werden. Die kompakte Deckschicht kann reduziert werden und in einer Dicke von 0,2 - 0,8 mm bei einer Dichte von > 800 kg/m³ ausgebildet sein. Die geschäumte Schicht wird in der Regel mit einer Dichte von 20 - 200 kg/m³ und einer Dicke von 0,5 - 4,0 mm ausgebildet. Die angeschäumte Schicht reagiert elastisch auf Druckbelastung wodurch eine angenehme Druckhaptik der Bauteile erhalten wird. Durch die geringe Dichte der geschäumten Schicht sinkt das Gewicht der Bauteile sowie der für die Herstellung notwendige Rohmaterialbedarf.

Diese Flächengebilde werden verwendet, um in Thermoformierverfahren Bauteile für den automobilen Innenraum, u.a. Instrumententafeln, zu produzieren. Enthalten diese Bauteile sogenannte unsichtbare Airbagsysteme, müssen die Folienmaterialien ein erforderliches Reißverhalten zeigen, wobei innerhalb von definierten Zeitvorgaben die Entfaltung des Airbags stattfinden muss, ein Partikelflug vermieden wird und der Schutz des Fahrgastes gewährleistet ist. Der aktuelle Stand der Technik sieht hierfür die rückseitige Schwächung der Dekorfolie vor. Die Schwächung kann häufig in Form einer Linie auf der Dekorseite beobachtet werden. Weiter ist bei der Herstellung der Bauteile neben der Kaschierung der Trägermaterialien ein zweiter Arbeitsschritt notwendig, bei dem die Konstruktion geschwächt wird.

So werden derzeit für die Herstellung eines Bauteils, z.B. einer Instrumententafel, für die Airbag-Abdeckung eine zweilagige Kompaktfolienkonstruktion aus einer inneren und einer äußeren Schicht verwendet, die zuerst im positiv- oder negativ-Tiefziehverfahren thermoformiert wird. Anschließend wird die so hergestellte Haut mit einem PUR-basierten Schaum hinterschäumt und dieser Schaum gleichzeitig mit einem stabilen Trägerteil verbunden.

Bei diesen Konstruktionen wird bei einer Airbag-Öffnung die Airbag-Klappe vom Sack gegen den PUR-Schaum getrieben, der dabei bricht. Im weiteren Verlauf trifft die Klappe auf die kompakte innere Schicht der zweilagige Kompaktfolienkonstruktion, die aufgrund ihrer signifikant höheren Festigkeit und Dehnfähigkeit nicht sofort bricht, sondern zuerst verstreckt wird. Hierbei kommt es zu einem Bruch der oberen Schichten des Schaums, was zur Folge hat, dass weiteres dehnfähiges Material zur Verfügung gestellt wird. Als Konsequenz dieser Ablöser wird die Strecke, die insgesamt gedehnt werden muss, bevor es zum Bruch kommt, deutlich länger. Hierbei wird die Zeit zur Öffnung des Airbags auf ein nicht zulässiges Maß verlängert. Desweiteren tritt ein durch das sogenannte Ballooning verursachte Risiko eines unzulässigen Partikelfluges auf. Um dem entgegenzuwirken, wird nach dem Stand der Technik eine Schwächung von der Folienrückseite mit den genannten Nachteilen eingebracht.

Die DE 101 64 761 A1 zeigt ebenfalls die Ausbildung einer Airbag-Abdeckung mit einer Schwächung oder Aufreißstelle auf der Rückseite der Deckschicht. Das hier offenbarte Verfahren zum Verfahren zum Herstellen einer Airbag-Abdeckung mit einer Trägerschicht, einer auf der Trägerschicht angeordneten Schaumstoffschicht und mindestens einer Sollbruchstelle, wobei in der Trägerschicht mindestens eine Öffnung an der Position der Sollbruchstelle gebildet wird und Schaumstoff auf die Trägerschicht unter Bildung der Schaumstoffschicht und unter Bildung einer Ausnehmung aufgebracht wird, die sich von den Rändern der Öffnung in die Schaumstoffschicht erstreckt, wobei der Schaumstoff in einen Zwischenraum zwischen der Trägerschicht und einer mit einer Aufreißstelle versehenen Deckschicht eingebracht wird, und wobei die Deckschicht in einer Schäumform befestigt wird und vor dem Einbringen der Schaumstoffschicht in den Zwischenraum die Aufreißstelle mit einem abdichtenden Schutzfilm bedeckt wird.

Die EP 2 161 125 A1 offenbarte ein möglichst einfach herzustellendes mehrschichtiges Kunststoffverbundformteil, welches aus einem Trägerelement sowie zwei darauf angeordneten Schichten besteht, nämlich einer Oberflächenschicht und einer Funktionsschicht (2-schichtige Oberflächenfolie mit Träger). Der dort offenbarte Gegenstand beinhaltet also bereits das Trägerelement und zeigt keine besonderen Ausbildungen zur Verbesserung des Aufreißverhaltens bei einem Airbag-Schuß.

Auch die WO 2012/100880 A1 offenbart ein Verfahren zur Herstellung einer mehrschichtigen Kunststofffolie, bei der ein Treibmittel in eine Kunststoffschmelze während des Extrusionsprozesses eingegeben wird. Hinweise auf besonders ausgebildete Dichten oder Reißdehnungen in den einzelnen Schichten ist ebenfalls nicht vorhanden

In der WO 2012/100880 wird ein Verfahren zur Herstellung von Schaumfolienlaminaten aus einer kompakten Deckschicht und einer Schaumschicht beschrieben, die auch bei relativ hohen Verstreckungsgraden von über 300% beim Tiefziehen genügend stabil sind und thermisch umgeformt werden können. Versuche mit diesen Schaumfolienlaminaten im ungeschwächten Zustand zum für Airbaganwendungen notwendigen Öffnungsverhalten haben aber gezeigt, dass das Öffnungsverhalten für eine sichere Airbaganwendung nicht ausreicht. Ein bedeutender Nachteil ist der aufgetretene Partikelflug, insbesondere bei einer Prüftemperatur von +85°C als Folge von sich bildenden Einschnürungen durch den bei Airbag-Öffnungen bekannten Ballooning-Effekt.

Aufgabe der Erfindung ist es, die vorstehend genannten Nachteile der Folien nach dem Stand der Technik zu überwinden. Insbesondere besteht die Aufgabe in der Bereitstellung einer Folie, welche zur Dekorierung von Bauteilen, insbesondere von Bauteilen für die Innenverkleidung von Kraftfahrzeugen, insbesondere von Airbag-Abdeckung geeignet ist und ohne eine Schwächung auskommt. Insbesondere soll die Folie auch eine ausreichende Stabilität für thermische Umformprozesse mit einem relativ großen Verstreckungsgrad (z.B. größer 200%) aufweisen. Ferner sollte eine große Design-Freiheit gewährleistet sein und der Materialverbrauch für die Herstellung sowie der Energieverbrauch für die Umformung minimiert werden.

Überraschenderweise konnte die Aufgabe durch ein Schaumfolienlaminat mit den Merkmalen des Anspruchs 1 gelöst werden. Das erfindungsgemäße Schaumfolienlaminat 1 umfasst daher eine kompakte Deckschicht 2 mit einer dreidimensional strukturierten oder glatten Oberfläche 6 auf der Oberseite und eine Schaumschicht 5 auf der Unterseite der Deckschicht, wobei die Deckschicht 2 eine äußere Schicht 3 und eine innere Schicht 4 aufweist, die äußere Schicht 3 eine Dicke im Bereich von 0,05 bis 0,3 mm aufweist, die innere Schicht 4 eine Dicke im Bereich von 0,2 bis 0,6 mm aufweist und an der Schaumschicht 5 gebunden ist und die Schaumschicht 5 eine Dicke im Bereich von 0,5 bis 2 mm und eine Dichte von mindestens 350 kg/m³ aufweist.

Die äußere Kompaktschicht 3 ermöglicht die für das Verarbeitungsverfahren der Folie notwendigen Eigenschaften, wie z.B. die Narbstabilität beim Positiv-Thermoforming bzw. Abformbarkeit beim Negativ-Thermoforming oder IMG-Verfahren, und stellt die Gebrauchseigenschaften der Folie, wie mechanische, haptische oder optische Eigenschaften, bereit. Die innere Kompaktschicht 4 ermöglicht eine signifikant reduzierte Reißdehnung bei den für eine Airbagöffnung wichtigen Geschwindigkeiten und Temperaturen. Eine weitere Reduktion der genannten mechanischen Eigenschaften wird durch die Schaumschicht 5 erreicht.

Das erfindungsgemäße Schaumfolienlaminat weist ein Reißverhalten auf, das den Anforderungen bei entsprechenden Airbag-Öffnung genügt, ohne dass eine Schwächung des Schaumfolienlaminat bzw. Dekormaterials erfolgen muss. Hierdurch wir zum einen eine Sichtbarkeit der Schwächungslinie vermieden, welches als Makel im Design bewertet wird. Der wesentliche Vorteil besteht aber darin, dass der Bauteilhersteller Kosten vermeiden kann in Bezug auf Beschaffung und Betreiben von Ausrüstung zur Einbringung von Schwächungslinien.

Ferner wird durch den Aufbau aus Schichten mit reduzierter Dicke das Gewicht und somit der Rohstoffverbrauch reduziert. Aufgrund der geringen Dicke der äußeren kompakten Schicht 3 kann die Materialgrundlage in dieser Schicht so gewählt werden, dass kundenspezifische Anforderungen wie Oberflächenbeständigkeiten, Glanz, Narbdarstellung, Alterungsbeständigkeiten, etc. erfüllt werden können, ohne dass das Reißverhalten dieser äußeren Schicht 3 berücksichtigt werden muss (Design-Freiheit). Die innere kompakte Schicht 4 unterstützt entscheidend diese genannten Eigenschaften, die durch die ausschließliche Verwendung einer denkbaren geschäumten Schicht analog der Schaumschicht 5 nicht realisierbar sind.

Weiter bietet diese Gesamtkonstruktion durch die kompakte Ausführung der äußeren Schicht 3 und inneren Schicht 4 eine höhere Wärmekapazität im Vergleich zu einer überwiegend geschäumten Konstruktion. Dadurch wird in den Thermoformierprozessen erreicht, dass der Wärmeverlust von Aufheiz- bis zum Verformschritt geringer ist und das Material verformbar bleibt. Dies führt im IMG-Prozess zu einer Verbesserung der Narbabformung. Im positiv-Thermoformprozess wird ein besserer Narberhalt erreicht.

Ein weiterer Vorteil besteht darin, dass das erfindungsgemäße Schaumfolienlaminat auch mit einem relativ großen Verstreckungsgrad, z.B. größer 200%, geformt werden kann, so dass auch komplexe Bauteilformen mit der Folie beschichtet werden können.

Das erfindungsgemäße Schaumfolienlaminat kann ein thermoplastisches Schaumfolienlaminat sein. Ein bevorzugtes Schaumfolienlaminat ist ein elektronenstrahlvernetztes Schaumfolienlaminat, bei dem dass Schaumfolienlaminat durch Behandlung mit Elektronenstrahlen vernetzt wird. Dadurch wird ein Zustand der Folie erreicht, bei der eine für den positiv-Tiefziehprozess vorteilhafte Narbstabilität erreicht werden kann. Das erfindungsgemäße Schaumfolienlaminat umfasst eine kompakte Deckschicht, die im Falle eines Laminates für das Positiv-Tiefziehen mit einer dreidimensional strukturierten Oberfläche auf der Oberseite und eine Schaumschicht auf der Unterseite der Deckschicht ausgeführt werden kann. Im Falle eines Laminates für das negativ-Tiefziehen kann die kompakte Deckschicht auch ohne dreidimensionale Oberflächenstruktur ausgeführt sein. Das Schaumfolienlaminat ist eine Folie, die eine zweilagige kompakte Deckschicht und eine daran gebundene Schaumschicht aufweist. Die Schaumschicht wird auch als geschäumte Schicht bezeichnet. Die kompakte Deckschicht kann auch als Dekorschicht oder Kompaktfolie bezeichnet werden.

Die kompakte Deckschicht ist zweilagig und weist eine äußere Schicht und eine innere Schicht auf. Die äußere Schicht ist an der inneren Schicht gebunden und an der inneren Schicht ist die Schaumschicht gebunden, so dass sich eine dreilagige Verbundstruktur ergibt. Die Anbindung zwischen der äußeren Schicht und inneren Schicht und zwischen inneren Schicht und der Schaumschicht kann auf übliche Weise erfolgen, z.B. thermisch oder durch Verkleben.

Die kompakte Deckschicht bzw. äußere Schicht der Deckschicht weist auf der Oberseite eine glatte Oberfläche oder dreidimensional strukturierte Oberfläche, nämlich eine so genannte Musterung oder Narbung, die in den verschiedensten Formen und Ausführungen möglich ist, die der Dekorierung dient, auf. Formteile, Formfolien oder - häute aus einer kompakten Deckschicht und einer Schaumschicht für die Innenverkleidung von Kraftfahrzeugen sind weithin bekannt. Das erfindungsgemäße Schaumfolienlaminat kann als Formteil, Formfolie oder -haut verwendet werden.

Im Stand der Technik sind zur Bildung der dreidimensional strukturierte Oberfläche verschiedene Verfahren bekannt, zum Beispiel Prägeverfahren oder Walzverfahren zur Herstellung von "endlosen" Folienbahnen oder auch Verfahren zur Herstellung von werkzeugfallenden einzelnen Formhäuten. Ein Beispiel dafür ist das "Inmould-Graining-Verfahren (IMG-Verfahren)", welches sich als Spezialverfahren aus dem Negativ-Tiefziehverfahren entwickelt hat. Dieses Inmould-Graining-Verfahren, bisher im Wesentlichen mit seinem englischsprachigen Begriff bekannt, lässt sich wohl am besten mit dem Begriff "narbgebendes Negativtiefziehen" übersetzen. Im Gegensatz zum Standardtiefziehverfahren, bei dem das Einformen in die dreidimensionale, bauteil-geometrische Struktur durch das Einfahren eines die spätere Bauteilkontur bildenden Tiefziehstempels in die Folie erfolgt, wird beim Negativtiefziehen eine Folie in eine Negativform hineingezogen, beispielsweise durch Vakuum. Das narbgebende Negativtiefziehen ist dabei eine besondere Ausgestaltung des Negativtiefziehens, in dem nicht nur die bauteil-geometrische Struktur, sondern auch die spätere Narbstruktur als Negativ in die Werkzeugoberfläche eingebracht wird.

Das erfindungsgemäße Schaumfolienlaminat ist besonders geeignet für und ausgerichtet auf die Herstellung von Bauteilen mit dem IMG Verfahren oder dem Positiv-Tiefziehverfahren sowie der Laminatherstellung im Walzverfahren oder Prägeverfahren. Die hergestellten Laminate können einem Vernetzungsschritt bevorzugt nach Einbringung der dreidimensionalen Oberflächenstruktur unterzogen werden, insbesondere der Elektronenstrahlvernetzung.

Die Vernetzung des Laminats kann mit energiereicher Strahlung, bevorzugt Elektronenstrahlung, erfolgen. Dies führt zu einer sehr guten Narbstabilität beim Tiefziehen und zu sehr guten Tiefzieheigenschaften. Die Bestrahlung führt zu einer Vernetzung im Kunststoff.

Das Schaumfolienlaminat kann entsprechend einem Bauteil geformt sein, wobei die Bauteilform vorzugsweise erhältlich ist durch Aufbringen des Schaumfolienlaminats mit einem formgebenden Verfahrensschritt auf einen Träger, der der Bauteilform entspricht. Für das Aufbringen des Schaumstofflaminats auf einen Träger, z.B. einen Armaturenbrett-Träger, kennt man neben dem Tiefziehen, wie z.B. den vorstehend genannten Verfahren, eine Reihe weiterer Umformverfahren, wie etwa Drück- oder Pressverfahren, bei denen die Folie gegen Formen bzw. gegen die genannten Träger gepresst wird und ihre Bauteilform erhält. Das Flächengebilde kann z. B. durch Thermoformen, In-Mould Graining oder Lowpressure-moulding in die gewünschte Form gebracht werden.

Die äußere Schicht der Deckschicht weist eine Dicke im Bereich von 0,05 bis 0,3 mm auf. Die innere Schicht der Deckschicht weist eine Dicke im Bereich von 0,2 bis 0,6 mm auf. Die Schaumschicht weist eine Dicke im Bereich von 0,5 bis 2 mm auf.

Damit sind diese Schichten bzw. Folien der Deckschicht auf der einen Seite noch nicht zu dünn, um bei der Bildung der dreidimensional strukturierten Oberfläche, z.B. beim IMG-Verfahren oder beim Positiv-Tiefziehen, eine qualitativ gute Narbe zu erreichen, und weisen auf der anderen Seite eine Dicke auf, die keine zu großen Auswirkungen auf die Materialkosten beinhaltet. Diese Foliendicken/Ausbildungen können natürlich mit den unterschiedlichsten Werkstoffen angepasst und hergestellt werden.

Unter kompakten Schichten oder Folien werden Schichten bzw. Folien mit einer Dichte von größer 800 kg/m³ verstanden. Kompakte Schichten sind insbesondere nicht geschäumte Schichten. Schaumschichten weisen in der Regel Dichten von kleiner 800 kg/m³ auf. Sowohl die äußere Schicht als auch die innere Schicht der kompakten Deckschicht sind ebenfalls für sich kompakte Schichten. Die Dichte der äußeren Schicht der Deckschicht ist insbesondere größer 800 kg/m³ und bevorzugt größer 860 kg/m³. Die Dichte der inneren Schicht der Deckschicht ist insbesondere größer 800 kg/m³ und bevorzugt größer 860 kg/m³.

Die Dichte der Schaumschicht ist mindestens 350 kg/m³, bevorzugt größer als 500 kg/m³. Die Dichte der Schaumschicht ist bevorzugt nicht mehr als 700 kg/m³ und bevorzugter nicht mehr als 600 kg/m³. Die Schaumschicht weist bevorzugt eine Dichte in einem Bereich von 350 bis 700 kg/m³, bevorzugt 500 bis 700 kg/m³ und besonders bevorzugt 500 bis 600 kg/m³ auf.

Die Schaumschicht weist mit einer Dichte von mindestens 350 kg/m³ eine relativ hohe Dichte für eine geschäumte Schicht auf. Sie wird vorzugsweise durch physikalisches Schäumen gebildet, wodurch eine physikalisch geschäumte Schicht erhalten wird.

Die geschäumte Schicht wird vorzugsweise durch Schaumextrusion gebildet. Dabei wird die Schicht aus geschäumten Kunststoff dadurch erzeugt, dass die Kunststoffschmelze während des Extrusionsprozesses oberhalb der Schmelztemperatur mit einem unter Überdruck stehendem Treibmittel, insbesondere einem inerten Gas, durch Einblasen beladen wird und diese gasbeladene Schmelze anschließend bei Austritt aus der Extrusionsanlage entspannt und unterhalb der Schmelztemperatur abgekühlt wird. Die Schicht aus geschäumten Kunststoff wird also durch Einblasen von unter Überdruck stehendem Treibmittel in eine Kunststoffschmelze während des Extrusionsprozesses und durch anschließendes Entspannen des unter Überdruck stehenden Treibmittels erzeugt.

Als Treibmittel können z. B. H₂O oder Inertgase, ggf. in Kombination miteinander, eingesetzt werden. Im Sinne einer ausgeprägten Schaumbildung wird vorteilhafterweise als Treibmittel ein inertes Gas eingesetzt oder ein Treibmittel eingesetzt, welches ein inertes Gas enthält. Als Inertgase können bei dem Verfahren alle dem Fachmann bekannten Inertgase eingesetzt werden, wobei sich im Hinblick auf Preis, Umweltverträglichkeit und Schäumverhalten CO₂ oder N₂ als besonders vorteilhaft erwiesen haben.

Das Schaummaterial kann anschließend, z.B. thermisch oder durch Verkleben, mit der kompakten zweilagigen Deckschicht, in Form eines flächigen Materials verbunden werden, so dass eine mehrschichtige Kunststofffolie mit einer geschäumten Schicht entsteht. Es ist auch möglich, die Schaumschicht zuerst mit der inneren Schicht zu verbinden und anschließend die äußere Schicht auf die innere Schicht anzubringen.

Die äußere Schicht der Deckschicht kann eine Kunststoffschicht oder eine Schicht aus Leder sein, wobei es sich bevorzugt um eine Kunststoffschicht handelt. Für die äußere Schicht kann z.B. ein übliches auf Leder oder Kunststoff basiertes Flächenmaterial verwendet werden. In dem Leder oder Kunststoff der äußeren Schicht können übliche Additive, wie z.B. Gleitmittel, Stabilisatoren, Füllstoffe, wie anorganische Füllstoffe, und/oder Pigmente, enthalten sein. Die äußere Schicht kann durch übliche Verfahren mit der inneren Schicht der Deckschicht verbunden werden, z.B. thermisch, durch Verkleben oder andere Methoden.

Sofern die äußere Schicht der Deckschicht eine Kunststoffschicht ist, kann der Kunststoff z.B. Polyolefin, insbesondere thermoplastisches Polyolefin (TPO), Polyurethan (PU), z.B. thermoplastische Polyurethane (TPU), Polyvinylchlorid (PVC) oder einer Kombination von zwei oder mehr davon sein, wobei TPO besonders bevorzugt ist. Der Einsatz von thermoplastischen Polyolefine (TPO) ist weit verbreitet. Sie werden auch als thermoplastische Elastomere auf Olefinbasis bezeichnet.

Beispiele für Polyolefine sind Polyethylen (PE), Polypropylen (PP) und Mischungen von Polyethylen (PE) und Polypropylen (PP).

Unter Polyethylen (PE) werden hier solche Polymere oder Copolymere verstanden, deren Gewichtsanteil an Ethylen > 50 Gew.-% beträgt. Unter Polypropylen (PP) werden hier solche Polymere oder Copolymere verstanden, deren Gewichtsanteil an Propylen > 50 Gew.-% beträgt.

Beispiele für TPO sind Verschnitte aus Ethylen-Propylen-Dien-Kautschuk (EPDM) mit Polyethylen (PE) und/oder Polypropylen (PP), Verschnitte aus Ethylen-Propylen-Kautschuk (EPM) mit Polypropylen (PP) und/oder Polyethylen (PE) und Ethylen-Propylen-Blends.

Die innere Schicht der Deckschicht ist vorzugsweise eine Kunststoffschicht. Für die innere Schicht kann z.B. ein übliches auf Kunststoff basiertes Flächenmaterial verwendet werden. Die innere Schicht kann durch übliche Verfahren mit der Schaumschicht verbunden werden, z.B. thermisch, durch Verkleben oder andere Methoden. In dem Kunststoff der inneren Schicht können übliche Additive, wie z.B. Gleitmittel, Stabilisatoren, Füllstoffe, wie anorganische Füllstoffe, und/oder Pigmente, enthalten sein.

Beispiele für geeignete Kunststoffe für die innere Schicht sind Polyolefin, insbesondere thermoplastisches Polyolefin (TPO), Polyurethan (PU), z.B. thermoplastische Polyurethane (TPU), Polyvinylchlorid (PVC) oder einer Kombination von zwei oder mehr davon, wobei TPO besonders bevorzugt ist. Beispiele für Polyolefine oder thermoplastische Polyolefine (TPO) wurden vorstehend genannt. Für die Schaumschicht sind z.B. Polyethylen (PE), Polypropylen (PP) und Mischungen von Polyethylen (PE) und Polypropylen (PP) geeignet.

Die Schaumschicht ist vorzugsweise eine geschäumte Kunststoffschicht. In dem Kunststoff der Schaumschicht können übliche Additive, wie z.B. Gleitmittel, Stabilisatoren, Füllstoffe, wie anorganische Füllstoffe, und/oder Pigmente, enthalten sein. Beispiele für geeignete Kunststoffe für die Schaumschicht sind Polyolefin, einschließlich thermoplastisches Polyolefin (TPO), Polyurethan (PU), z.B. thermoplastische Polyurethane (TPU), Polyvinylchlorid (PVC) oder einer Kombination von zwei oder mehr davon, wobei Polyolefin und/oder TPO besonders bevorzugt ist. Beispiele für Polyolefine oder thermoplastische Polyolefine (TPO) wurden vorstehend genannt.

In einer bevorzugten Ausführungsform sind die äußere Schicht, die innere Schicht und die Schaumschicht (5) jeweils eine Kunststoffschicht. Die Kunststoffe sind bevorzugt thermoplastische Kunststoffe. Thermoplastische Kunststoffe schließen auch thermoplastische Elastomere ein, die sich im Bereich üblicher Gebrauchstemperaturen gummielastisch verhalten, aber bei höherer Temperatur wie Thermoplaste verarbeitet werden können.

Die Materialzusammensetzung des Schichtmaterials für die äußere Schicht und die des Schichtmaterials für die innere Schicht ist insbesondere verschieden. Dies kann zum Beispiel durch Variation der Art und/oder Mengenanteile der eingesetzten Polymere und/oder Variation der Menge und oder Art der Additive, insbesondere Füllstoffe, erfolgen.

Die Schaumschicht weist vorteilhafter eine Bruchfestigkeit und -dehnung auf, die deutlich unterhalb der Werte für die kompakte äußere Schicht der Deckschicht liegen. Die Bruchfestigkeit und -dehnung der inneren Schicht der Deckschicht und/oder der Schaumschicht ist vorzugsweise kleiner als die Bruchfestigkeit und -dehnung der äußeren Schicht der Deckschicht. Bruchfestigkeit und -dehnung können durch Zug-Dehnungs-Untersuchungen gemäß DIN 527-3 bestimmt werden. Die Angaben zur Bruchfestigkeit und -dehnung der einzelnen Schichten beziehen sich dabei sowohl auf die Bruchfestigkeit und -dehnung in Längsrichtung als auch auf die Bruchfestigkeit und -dehnung in Querrichtung. Längs- und Querrichtung stehen dabei senkrecht aufeinander, wobei als Längsrichtung die Produktionsrichtung (Walzrichtung, Extrusionsrichtung) der Folie und als Querrichtung die Richtung senkrecht zur Produktionsrichtung definiert ist. Bruchdehnung wird auch als Reißdehnung bezeichnet.

In einer bevorzugten Ausführungsform des Schaumfolienlaminats ist unter den Bedingungen eines Airbagschusses die Reißdehnung der inneren Schicht sowie der Schaumschicht kleiner als die Reißdehnung der äußeren Schicht, wobei die Airbag relevanten Bedingungen definiert sind als ein Temperaturbereich zwischen -35 und +85 °C und hohe auftretende Dehnraten bedingt durch die Öffnungsgeschwindigkeiten eines Airbags von bis zu 90 m/s.

Der Schmelzflussindex (MFI, melt flow index) wie hier verwendet wird gemäß DIN EN ISO 1133 bei einer Temperatur von 230°C und einer Last von 2,16 kg bestimmt. Der Schmelzflussindex (MFI) wird auch als Schmelze-Massefließrate (MFR) bezeichnet. Die Angaben zum MFI der Schichten beziehen sich hier auf das für die jeweilige Schicht eingesetzte Schichtmaterial.

In einer bevorzugten Ausführungsform ist der Schmelzflussindex (MFI) der inneren Schicht größer ist als der Schmelzflussindex (MFI) der äußeren Schicht, wobei es bevorzugt ist, dass die Differenz zwischen dem Schmelzflussindex (MFI) der inneren Schicht und dem Schmelzflussindex (MFI) der äußeren Schicht mindestens 1 g/10 min, bevorzugt mindestens 2 g/10 min, beträgt. Es ist besonders bevorzugt, dass die äußere Schicht einen Schmelzflussindex (MFI) von kleiner als 1 g/10 min aufweist und die innere Schicht einen Schmelzflussindex (MFI) von größer als 3 g/10 min aufweist.

Die Einstellung der MFI-Werte kann z.B. durch die Auswahl geeigneter Polymere und gegebenenfalls der Art und/oder Menge an eingesetzten Füllstoffen eingestellt werden. Der Fachmann ist mit den Maßnahmen für die Einstellung des MFI-Werts solcher Schichten vertraut. Der Schmelzflussindex korreliert z.B. relativ gut mit der Kettenlänge der Polymermoleküle bzw. dem Molekulargewicht.

Durch das erfindungsgemäße Schichtfoliensystem wird die Bruchdehnung des Gesamtkonstruktion derart reduziert, dass ein Reißverhalten entsprechend der Anforderungen an ein Airbag-System erreicht wird, wobei besonders gute Ergebnisse erreicht werden, wenn die MFI-Werte der äußeren und inneren Schicht gemäß der vorstehenden Angaben eingestellt wird. Ein besonderer Vorteil der Erfindung ist, dass dieses Reißverhalten erreicht werden, ohne dass das Schaumfolienlaminat mit einer Schwächung versehen werden muss, die nach dem Stand der Technik erforderlich ist. Eine nachträgliche Bearbeitung zur rückseitigen Schwächung durch Sollbruchlinien, wie z.B. Aufreißnähte oder Perforationslinien, kann daher vermieden werden.

Das erfindungsgemäße Schaumfolienlaminat kann gegebenenfalls auf der glatten oder dreidimensional strukturierten Oberfläche der Deckschicht eine Lackschicht aufweisen. Die Lackschicht kann für die Verbesserung der Oberflächeneigenschaften, wie z.B. hinsichtlich der Optik oder der Kratzbeständigkeit, vorteilhaft sein. Die Lackschicht kann durch herkömmliche Maßnahmen auf die Oberfläche aufgebracht werden. Die Lackschicht ist vorzugsweise eine Polyurethan-Lackschicht. Die Dicke der optionalen Lackschicht kann in breiten Bereichen variieren, die Lackschicht weist aber vorzugsweise eine Dicke im Bereich von 1 bis 25 µm, bevorzugter 2 bis 15 µm, auf.

Das erfindungsgemäße Schaumfolienlaminat kann ferner gegebenenfalls auf der Seite der Schaumschicht, die der Deckschicht entgegengesetzt ist, d.h. auf der Unterseite, mit einer Haftschicht oder einem Primer versehen sein. Die Haftschicht oder der Primer können als Verklebungsschicht oder Haftvermittler dienen, um eine Verbindung des Schaumfolienlaminats mit dem Bauteil oder einen Träger, an das bzw. den das Laminat angebracht werden soll, zu verbessern bzw. zu ermöglichen.

Besonders geeignet ist das erfindungsgemäße Schaumfolienlaminat zur Beschichtung eines Innenverkleidungsteils für ein Kraftfahrzeug, vorzugsweise Armaturenbrett, wobei das Schaumfolienlaminat bevorzugt mindestens im Bereich der Airbag-Abdeckungen bzw. im Bereich der Aufreißnähte der Airbag-Abdeckungen angebracht wird. Das Schaumfolienlaminat eignet sich insbesondere für die Beschichtung von Innenverkleidungsteilen für ein Kraftfahrzeug im Bereich der Airbag-Abdeckungen bzw. im Bereich der Aufreißnähte der Airbag-Abdeckungen.

Die Erfindung betrifft dementsprechend auch die Verwendung des erfindungsgemäßen Schaumfolienlaminats für die Beschichtung von Bauteilen, bevorzugt von Bauteilen für die Innenverkleidung von Kraftfahrzeugen, z.B. einem Armaturenbrett, insbesondere für die Beschichtung im Bereich der Airbag-Abdeckungen bzw. im Bereich der Aufreißnähte der Airbag-Abdeckungen.

Die Erfindung betrifft ferner ein Innenverkleidungsteil für ein Kraftfahrzeug, vorzugsweise Armaturenbrett, auf das ein erfindungsgemäßes Schaumfolienlaminat aufgebracht ist. Besonders bevorzugt ist das Schaumfolienlaminat mindestens im Bereich der Airbag-Abdeckungen bzw. im Bereich der Aufreißnähte der Airbag-Abdeckungen aufgebracht.

Anhand von Vergleichs- und Ausführungsbeispielen soll die Erfindung näher erläutert werden.

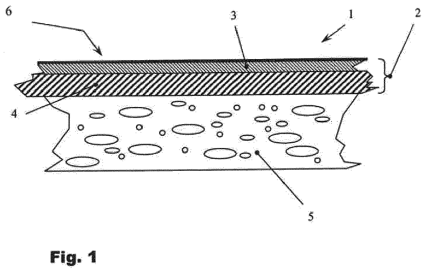

Fig. 1 zeigt den schematischen Aufbau eines erfindungsgemäßen Schaumfolienlaminats.

Die Fig. 1 zeigt den Aufbau eines schematischen Aufbau eines erfindungsgemäßen Schaumfolienlaminats mit einer zweilagigen kompakten Deckschicht 2 aus einer äußeren Lage 3 und einer inneren Lage 4, die der Schaumschicht 5 benachbart ist. Die Folie kann zur Verkleidung eines Kfz-Armaturenbrettes im Bereich des Beifahrer-Airbags dienen. Das thermoplastische Schaumfolienlaminat 1 ist mit einer geprägten dreidimensional strukturierten Oberfläche 6 auf der äußeren Deckschicht versehen, also mit einer durch Walzprägung außen aufgeprägten Narbe.

### Beispiel 1

Ein Schaumfolienlaminat 1 gemäß dem Aufbau von Fig. 1 wurde mit folgenden Parametern hergestellt. Die Deckschicht 2 besitzt eine Gesamtdicke von 0,5 mm. Die äußere Schicht 3 ist eine TPO-Schicht, die eine Dichte von 880 kg/m³ und eine Schichtdicke von 0,2 mm aufweist. Die innere Schicht 4 ist eine TPO-Schicht, die eine Dichte von 900 kg/m³ und eine Schichtdicke von 0,3 mm aufweist. Die Schaumschicht 5 ist eine geschäumte Polyolefin-Schicht, die eine Dichte von 570 kg/m³ und eine Schichtdicke von 0,9 mm aufweist.

### Vergleichsbeispiel 1

Als Vergleich wurde eine zweilagige Kompaktfolie mit folgenden Parametern hergestellt. Die äußere Schicht der Kompaktfolie ist eine TPO-Schicht, die eine Dichte von 880 kg/m³ und eine Schichtdicke von 0,5 mm aufweist. Die innere Schicht der Kompaktfolie ist eine TPO-Schicht, die eine Dichte von 880 kg/m³ und eine Schichtdicke von 0,9 mm aufweist.

### Vergleichsbeispiel 2

Als weiterer Vergleich wurde eine zweilagige Folie aus einer kompakten Schicht und einer Schaumschicht mit folgenden Parametern hergestellt. Die (äußere) kompakte Schicht der Folie ist eine TPO-Schicht, die eine Dichte von 880 kg/m³ und eine Schichtdicke von 0,5 mm aufweist. Die (innere) Schaumschicht der Folie ist ein PP-Schaum, der eine Dichte von 67 kg/m³ und eine Schichtdicke von 2 mm aufweist.

### Prüfung des Bruchdehnungsverhaltens

Die Bruchdehnung der Folien in Längsrichtung gemäß Beispiel 1 und der Vergleichsbeispiele 1 und 2 wurde mittels Zug-Dehnungs-Untersuchungen gemäß DIN 527-3 in Abhängigkeit von der Temperatur geprüft. Die Prüfgeschwindigkeit betrug ca. 0,3 m/s. Die erhaltenen Ergebnisse sind in nachstehende Tabelle aufgeführt.

**Tabelle. Bruchdehnung der Folien bei verschiedenen Temperaturen in [%]**

| | Vgl.-bsp. 1 | Bsp. 1 | Vgl.-bsp. 2 |
|---|---|---|---|
| -35°C | 90 | 90 | 20 |
| 23°C | 450 | 400 | 500 |
| 85°C | 900 | 550 | 700 |
| 120°C | 1100* | 1200* | 600 |
| 150°C | 1100* | 900 | 300 |
| 180°C | 1000 | 800 | 200 |

| | | | |
|---|---|---|---|
| * Abbruch ohne Rissbildung | | | |

Die Versuche zeigen, dass die erfindungsgemäße Folie gemäß Beispiel 1 eine verringerte Bruchdehnung gegenüber der Kompaktfolie gemäß Vergleichsbeispiel 1 aufweist. Andererseits ist die Stabilität von Beispiel 1 ausreichend, um eine thermische Umformung mit relativ hohen Verstreckungsgraden, z.B. größer 200%, zu ermöglichen. Dagegen erniedrigt sich die Bruchdehnung der Schaumfolie gemäß Vergleichsbeispiel 2 bei höheren Temperaturen deutlich. Mit der Schaumfolie gemäß Vergleichsbeispiel 2 ist daher eine thermische Umformung mit relativ hohen Verstreckungsgraden nicht möglich.

Die für die Prüfung im Labor eingesetzte Prüfgeschwindigkeit (ca. 0,3 m/s) weicht von den realen Öffnungszeiten von bis zu 90 m/s beim realen Airbag-Schuss zu stark ab, als dass sich aus den Laborversuchen eine Korrelation der Ergebnisse mit dem Verhalten beim realen Airbag-Schussversuch ableiten lässt.

### Airbag-Schussversuche

Das Öffnungsverhalten der Folien gemäß Beispiel 1 und der Vergleichsbeispiele 1 und 2 bei einem realen Airbag-Schussversuch wurde geprüft. Hierfür wurden die jeweiligen Folien auf eine Airbag-Abdeckung aufgebracht und dann der Airbag geöffnet. Die Kompaktfolie gemäß Vergleichsbeispiel 1 wurde mit einem PUR-Schaum hinterschäumt, wobei der Schaum gleichzeitig mit dem Bauteil bzw. Träger verbunden wurde.

Die erfindungsgemäße Folie gemäß Beispiel 1 zeigte beim Airbag-Schuss ein Reißverhalten entsprechend den Anforderungen für ein Airbagsystem. Eine rückseitige Schwächung ist nicht erforderlich.

Die Kompaktfolie gemäß Vergleichsbeispiel 1 bricht beim Airbag-Schuss aufgrund der höheren Festigkeit und Dehnfähigkeit nicht sofort, sondern wird zuerst verstreckt. Hierbei kommt es zu einem Bruch der oberen Schichten des PUR-Schaums, was zur Folge hat, dass weiteres dehnfähiges Material zur Verfügung gestellt wird. Die Strecke, die insgesamt gedehnt werden muss, bevor es zum Bruch kommt, wird deutlich länger, wodurch die Zeit zur Öffnung des Airbags auf ein nicht zulässiges Maß verlängert wird. Ein unzulässiger Partikelflug ist möglich. Eine Verwendung der Kompaktfolie für eine Airbag-Abdeckung ist daher ohne eine Schwächung der Folienrückseite nicht möglich.

Die Folie gemäß Vergleichsbeispiel 2 zeigt ein akzeptables Öffnungsverhalten beim Airbag-Schuss. Wie vorstehend dargestellt ist diese Folie aber nicht geeignet für die Herstellung eines komplexen Bauteils mit hohen Verstreckungsgraden über 200%.

### Vergleichsbeispiel 3

Zur Prüfung von Varianten wurden eine Alternative getestet. Hierfür wurde eine Folie gemäß Beispiel 1 hergestellt, außer dass die innere Schicht 4 angeschäumt wurde. Diese Variante zeigte Nachteile gegenüber der erfindungsgemäßen Folie. Das Rissverhalten beim Airbag-Schuss ohne Schwächung war akzeptabel, aber insbesondere die Narbstandfestigkeit bzw Abformbarkeit war nicht gegeben.

### Vergleichsbeispiel 4

Zur Prüfung von Varianten wurden eine weitere Alternative getestet. Hierfür wurde eine Folie gemäß Beispiel 1 hergestellt, außer dass die Schicht 5 nicht als geschäumte Schicht sondern analog der inneren Schicht 4 kompakt ausgeführt wurde. Dadurch erhöht sich die Festigkeit der Gesamtkonstruktion. Eine Erhöhung der Festigkeit führt aber bei der Airbagöffnung zu weitreichenden Schaumablösern und unkontrollierbarem Austreten des Airbagsackes. Teilweise wurde beobachtet, daß der Airbagsack die Dekorfolie unterwandert und undefiniert austritt.

## Patentansprüche

1. Schaumfolienlaminat (1) im Bereich von Airbag-Abdeckungen eines Innenverkleidungsteils für Kraftfahrzeuge, umfassend eine kompakte Deckschicht (2) mit einer dreidimensional strukturierten oder glatten Oberfläche (6) auf der Oberseite und eine Schaumschicht (5) auf der Unterseite der Deckschicht, wobei die Deckschicht (2) eine äußere Schicht (3) und eine innere Schicht (4), beide aus thermoplastischem Kunststoff mit jeweils einer Dichte von mindestens 800 kg/m³ aufweist, wobei die äußere Schicht (3) eine Dicke im Bereich von 0,05 bis 0,3 mm aufweist, die innere Schicht (4) eine Dicke im Bereich von 0,2 bis 0,6 mm aufweist und an der Schaumschicht (5) gebunden ist und die Schaumschicht (5) eine Dicke im Bereich von 0,5 bis 2 mm und eine Dichte zwischen 350 kg/m³ und 700 kg/m³ aufweist wobei unter den Bedingungen eines Airbagschusses die Reißdehnung der inneren Schicht (4) sowie der Schaumschicht (5) kleiner ist als die Reißdehnung der äußeren Schicht (3), wobei die Airbag relevanten Bedingungen definiert sind als ein Temperaturbereich zwischen -35 und +85 °C und hohe auftretende Dehnraten bedingt durch die Öffnungsgeschwindigkeiten eines Airbags von bis zu 90 m/s.

2. Schaumfolienlaminat nach Anspruch 1, **dadurch gekennzeichnet, dass** der Schmelzflussindex (MFI) der inneren Schicht (4) größer ist als der Schmelzflussindex (MFI) der äußeren Schicht (3), wobei der Schmelzflussindex (MFI) gemäß DIN EN ISO 1133 bei einer Temperatur von 230°C und einer Last von 2,16 kg bestimmt wird.

3. Schaumfolienlaminat nach Anspruch 1 oder 2, **dadurch gekennzeichnet, dass** die Differenz zwischen dem Schmelzflussindex (MFI) der inneren Schicht (4) und dem Schmelzflussindex (MFI) der äußeren Schicht (3) mindestens 1 g/10 min, bevorzugt mindestens 2 g/10 min, beträgt.

4. Schaumfolienlaminat nach irgendeinem der Ansprüche 1 bis 3, **dadurch gekennzeichnet, dass** die äußere Schicht (3) einen Schmelzflussindex (MFI) von kleiner als 1 g/10 min aufweist und die innere Schicht (4) einen Schmelzflussindex (MFI) von größer als 3 g/10 min aufweist.

5. Schaumfolienlaminat nach irgendeinem der Ansprüche 1 bis 4, **dadurch gekennzeichnet, dass** die Schaumschicht (5) eine Dichte von mehr als als 500 kg/m³ aufweist.

6. Schaumfolienlaminat nach irgendeinem der Ansprüche 1 bis 5, **dadurch gekennzeichnet, dass** die äußere Schicht (3), die innere Schicht (4) und die Schaumschicht (5) jeweils eine Kunststoffschicht sind, wobei der Kunststoff unabhängig voneinander bevorzugt ausgewählt ist aus Polyolefin, insbesondere thermoplastischem Polyolefin (TPO), Polyurethan (PU), Polyvinylchlorid (PVC) oder einer Kombination von zwei oder mehr davon, wobei Polyolefin und/oder TPO besonders bevorzugt sind.

7. Schaumfolienlaminat nach irgendeinem der Ansprüche 1 bis 6, **dadurch gekennzeichnet, dass** die Schaumschicht (5) eine physikalisch geschäumte Schicht ist, wobei es sich bevorzugt um eine extrudierte geschäumte Schicht handelt.

8. Schaumfolienlaminat nach irgendeinem der Ansprüche 1 bis 7, **dadurch gekennzeichnet, dass** auf der glatten oder dreidimensional strukturierten Oberfläche (6) der Deckschicht eine Lackschicht, vorzugsweise eine Polyurethan-Lackschicht, angeordnet ist und/oder auf der Seite der Schaumschicht (5), die der Deckschicht entgegengesetzt ist, eine Haftschicht oder ein Primer angeordnet ist.

9. Schaumfolienlaminat nach irgendeinem der Ansprüche 1 bis 8, **dadurch gekennzeichnet, dass** das Schaumfolienlaminat entsprechend einem Bauteil geformt ist, wobei die Bauteilform vorzugsweise erhältlich ist durch Aufbringen des Schaumfolienlaminat mit einem formgebenden Verfahrensschritt auf einen Träger, der der Bauteilform entspricht.

10. Schaumfolienlaminat nach irgendeinem der Ansprüche 1 bis 9, **dadurch gekennzeichnet, dass** das Schaumfolienlaminat elektronenstrahlvernetzt ist, insbesondere für eine vorteilhafte Narbstabilität beim positiv-Tiefziehprozess.

11. Verwendung eines Schaumfolienlaminats nach irgendeinem der Ansprüche 1 bis 10 für die Beschichtung von Bauteilen, bevorzugt von Bauteilen für die Innenverkleidung von Kraftfahrzeugen, insbesondere mindestens im Bereich der Airbag-Abdeckungen oder im Bereich der Aufreißnähte der Airbag-Abdeckungen.

12. Innenverkleidungsteil für ein Kraftfahrzeug, vorzugsweise Armaturenbrett, welches mit einem Schaumfolienlaminat nach irgendeinem der Ansprüche 1 bis 10 versehen ist.

13. Innenverkleidungsteil nach Anspruch 12 , wobei das Schaumfolienlaminat mindestens im Bereich der Airbag-Abdeckungen bzw. im Bereich der Aufreißnähte der Airbag-Abdeckungen angeordnet ist.

## Claims

1. Foam-film laminate (1) in the region of airbag coverings of an interior trim part for motor vehicles, comprising a compact cover layer (2) having a three-dimensionally structured or smooth surface (6) on the upper side and a foam layer (5) on the lower side of the cover layer, wherein the cover layer (2) has an outer layer (3) and an inner layer (4) which both consist of thermoplastic material with a density in each case of at least 800 kg/m³, wherein the outer layer (3) has a thickness in the range of from 0.05 to 0.3 mm, the inner layer (4) has a thickness in the range of from 0.2 to 0.6 mm and is bonded to the foam layer (5), and the foam layer (5) has a thickness in the range of from 0.5 to 2 mm and a density of between 350 kg/m³ and 700 kg/m³, wherein, under the conditions of firing of an airbag, the elongation at break of the inner layer (4) and also of the foam layer (5) is lower than the elongation at break of the outer layer (3), wherein the airbag-relevant conditions are defined as a temperature range of between -35 and +85°C and the occurrence of high elongation rates caused by the opening speeds of an airbag of up to 90 m/s.

2. Foam-film laminate according to Claim 1, **characterized in that** the melt flow index (MFI) of the inner layer (4) is greater than the melt flow index (MFI) of the outer layer (3), wherein the melt flow index (MFI) is determined in accordance with DIN EN ISO 1133 at a temperature of 230°C and a load of 2.16 kg.

3. Foam-film laminate according to Claim 1 or 2, **characterized in that** the difference between the melt flow index (MFI) of the inner layer (4) and the melt flow index (MFI) of the outer layer (3) is at least 1 g/10 min, preferably at least 2 g/10 min.

4. Foam-film laminate according to any one of Claims 1 to 3, **characterized in that** the outer layer (3) has a melt flow index (MFI) of less than 1 g/10 min and the inner layer (4) has a melt flow index (MFI) of greater than 3 g/10 min.

5. Foam-film laminate according to any one of Claims 1 to 4, **characterized in that** the foam layer (5) has a density of greater than 500 kg/m³.

6. Foam-film laminate according to any one of Claims 1 to 5, **characterized in that** the outer layer (3), the inner layer (4) and the foam layer (5) are each a layer of plastics material, wherein the plastics material is preferably selected, independently of one another, from polyolefin, in particular thermoplastic polyolefin (TPO), polyurethane (PU), polyvinyl chloride (PVC), or a combination of two or more thereof, wherein polyolefin and/or TPO are particularly preferred.

7. Foam-film laminate according to any one of Claims 1 to 6, **characterized in that** the foam layer (5) is a physically foamed layer, wherein it is preferably an extruded foamed layer.

8. Foam-film laminate according to any one of Claims 1 to 7, **characterized in that** a lacquer layer, preferably a polyurethane lacquer layer, is arranged on the smooth or three-dimensionally structured surface (6) of the cover layer, and/or an adhesive layer or a primer is arranged on the side of the foam layer (5) that is remote from the cover layer.

9. Foam-film laminate according to any one of Claims 1 to 8, **characterized in that** the foam-film laminate is formed in a manner corresponding to a component, wherein the shape of the component can preferably be obtained by applying the foam-film laminate to a carrier which corresponds to the shape of the component in a shaping method step.

10. Foam-film laminate according to any one of Claims 1 to 9, **characterized in that** the foam-film laminate is electron-beam crosslinked, in particular for the purpose of advantageous grain stability in the positive deep-drawing process.

11. Use of a foam-film laminate according to any one of Claims 1 to 10 for coating components, preferably components for the interior trim of motor vehicles, in particular at least in the region of the airbag coverings or in the region of the tear-open seams of the airbag coverings.

12. Interior trim part for a motor vehicle, preferably a dashboard, which is provided with a foam-film laminate according to any one of Claims 1 to 10.

13. Interior trim part according to Claim 12, wherein the foam-film laminate is arranged at least in the region of the airbag coverings and/or in the region of the tear-open seams of the airbag coverings.

## Revendications

1. Stratifié de feuilles de mousse (1) dans la zone de recouvrements d'airbag d'une pièce d'habillage intérieur pour véhicules automobiles, comprenant une couche de recouvrement compacte (2) munie d'une surface structurée tridimensionnellement ou lisse (6) sur le côté supérieur et une couche de mousse (5) sur le côté inférieur de la couche de recouvrement, la couche de recouvrement (2) comprenant une couche extérieure (3) et une couche intérieure (4), toutes les deux en matière plastique thermoplastique ayant respectivement une densité d'au moins 800 kg/m³, la couche extérieure (3) présentant une épaisseur dans la plage allant de 0,05 à 0,3 mm, la couche intérieure (4) présentant une épaisseur dans la plage allant de 0,2 à 0,6 mm et étant reliée à la couche de mousse (5), et la couche de mousse (5) présentant une épaisseur dans la plage allant de 0,5 à 2 mm et une densité comprise entre 350 kg/m³ et 700 kg/m³; dans les conditions d'un déploiement d'airbag, l'allongement à la rupture de la couche intérieure (4) et de la couche de mousse (5) étant inférieur à l'allongement à la rupture de la couche extérieure (3), les conditions pertinentes pour l'airbag étant définies par une plage de température comprise entre -35 et +85 °C et des taux d'allongement produits élevés causés par les vitesses d'ouverture d'un airbag de jusqu'à 90 m/s.

2. Stratifié de feuilles de mousse selon la revendication 1, **caractérisé en ce que** l'indice de fluidité à chaud (MFI) de la couche intérieure (4) est supérieur à l'indice de fluidité à chaud (MFI) de la couche extérieure (3), l'indice de fluidité à chaud (MFI) étant déterminé selon DIN EN ISO 1133 à une température de 230 °C et une charge de 2,16 kg.

3. Stratifié de feuilles de mousse selon la revendication 1 ou 2, **caractérisé en ce que** la différence entre l'indice de fluidité à chaud (MFI) de la couche intérieure (4) et l'indice de fluidité à chaud (MFI) de la couche extérieure (3) est d'au moins 1 g/10 min, de préférence d'au moins 2 g/10 min.

4. Stratifié de feuilles de mousse selon l'une quelconque des revendications 1 à 3, **caractérisé en ce que** la couche extérieure (3) présente un indice de fluidité à chaud (MFI) inférieur à 1 g/10 min et la couche intérieure (4) présente un indice de fluidité à chaud (MFI) supérieur à 3 g/10 min.

5. Stratifié de feuilles de mousse selon l'une quelconque des revendications 1 à 4, **caractérisé en ce que** la couche de mousse (5) présente une densité de plus de 500 kg/m³.

6. Stratifié de feuilles de mousse selon l'une quelconque des revendications 1 à 5, **caractérisé en ce que** la couche extérieure (3), la couche intérieure (4) et la couche de mousse (5) sont respectivement une couche de matière plastique, la matière plastique étant de préférence choisie indépendamment parmi une polyoléfine, notamment une polyoléfine thermoplastique (TPO), le polyuréthane (PU), le polychlorure de vinyle (PVC) ou une combinaison de deux ou plus d'entre eux, une polyoléfine et/ou une TPO étant particulièrement préférées.

7. Stratifié de feuilles de mousse selon l'une quelconque des revendications 1 à 6, **caractérisé en ce que** la couche de mousse (5) est une couche moussée physiquement, celle-ci consistant de préférence en une couche moussée extrudée.

8. Stratifié de feuilles de mousse selon l'une quelconque des revendications 1 à 7, **caractérisé en ce qu'**une couche de vernis, de préférence une couche de vernis de polyuréthane, est agencée sur la surface lisse ou structurée tridimensionnellement (6) de la couche de recouvrement et/ou une couche adhésive ou un apprêt est agencé sur le côté de la couche de mousse (5) qui est opposé à la couche de recouvrement.

9. Stratifié de feuilles de mousse selon l'une quelconque des revendications 1 à 8, **caractérisé en ce que** le stratifié de feuilles de mousse est mis en forme conformément à un composant, la forme du composant pouvant de préférence être obtenue par application du stratifié de feuilles de mousse avec une étape de procédé de mise en forme sur un support, qui correspond à la forme du composant.

10. Stratifié de feuilles de mousse selon l'une quelconque des revendications 1 à 9, **caractérisé en ce que** le stratifié de feuilles de mousse est réticulé par faisceau d'électrons, notamment pour une stabilité de grainage avantageuse lors d'un processus d'emboutissage profond positif.

11. Utilisation d'un stratifié de feuilles de mousse selon l'une quelconque des revendications 1 à 10 pour le revêtement de composants, de préférence de composants pour l'habillage intérieur de véhicules automobiles, notamment au moins dans la zone des recouvrements d'airbag ou dans la zone des coutures déchirables des recouvrements d'airbag.

12. Pièce d'habillage intérieur pour un véhicule automobile, de préférence tableau de bord, qui est munie d'un stratifié de feuilles de mousse selon l'une quelconque des revendications 1 à 10.

13. Pièce d'habillage intérieur selon la revendication 12, dans laquelle le stratifié de feuilles de mousse est agencé au moins dans la zone des recouvrements d'airbag ou dans la zone des coutures déchirables des recouvrements d'airbag.
